# EUROPÄISCHE PATENTSCHRIFT

(11) **EP 0 560 203 B1**
(45) Veröffentlichungstag und Bekanntmachung des Hinweises auf die Patenterteilung: **08.11.1995**
(21) Anmeldenummer: 93103428.4
(22) Anmeldetag: 03.03.1993
(51) Int. Cl.: F16M 1/021

(54) **Lagerung für die Kurbelwelle einer Zweitakt-Brennkraft-maschine mit Kurbelgehäuseverdichtung**
Crankshaft support for a two stroke combustion engine with crankcase sealing
Support de vilebrequin pour moteur à combustion deux-temps avec étanchéité de carter de vilebrequin

(30) Priorität: 13.03.1992 DE 4207991
(43) Veröffentlichungstag der Anmeldung: 15.09.1993
(73) Patentinhaber: FORD-WERKE AKTIENGESELLSCHAFT, 50725 Köln (DE); FORD MOTOR COMPANY LIMITED, Brentwood, Essex CM13 3BW (GB); FORD FRANCE SOCIETE ANONYME, 92506 Rueil Malmaison Cedex (FR)
(72) Erfinder: Bartsch, Guenter, W-5352 Zuelpich-Winterich (DE)
(74) Vertreter: Messulam, Alec Moses

(56) Entgegenhaltungen:
- DE-A- 3 735 019
- DE-A- 4 004 767
- DE-B- 1 272 629
- DE-C- 904 839
- GB-A- 117 614
- US-A- 2 899 015
- US-A- 3 227 146
- US-A- 5 052 355

## Beschreibung

Die Erfindung bezieht sich auf eine Lagerung für die Kurbelwelle einer Zweitakt-Brennkraftmaschine mit Kurbelgehäuseverdichtung, der im Oberbegriff des Patentanspruches 1 erläuterten Art.

Aus der US-A-3 227 146 ist eine Zweitakt-Brennkraftmaschine mit Kurbelgehäuseverdichtung bekannt, bei der als Lagerung für die Kurbelwelle Gleitlager verwendet werden, die naturgemäß mit Schmiermittel unter Druck versorgt werden müssen, wobei Vorkehrungen getroffen werden müssen, um eine unerwünschte Vermischung des Schmiermittels mit der Verbrennungsluft im Kurbelgehäuse zu vermeiden, was bei der nachfolgenden Verbrennung zu einer unerwünscht ungünstigen Abgasemission führen würde.

Bei der bekannten Zweitakt-Brennkraftmaschine sind daher benachbart den Gleitlagern Dichtungen zur Kurbelwelle hin vorgesehen und separate Abdeckungen angeordnet, die den Kurbeltrieb-Verdichtungsraum von einem Schmiermittelsammelraum einer Ölwanne trennen. Als Dichtungen zur Kurbelwelle werden hierbei schleifende Gleitdichtungen in Form von Gewebe- oder Elastomer-Dichtungen verwendet, die den Wirkungsgrad der Brennkraftmaschine durch die auftretende Reibleistung vermindert. Dennoch in die Verdichtungsräume gelangendes Schmiermittel wird am Boden abgesaugt.

Auf die US-A-2 899 015 wird beispielsweise hingewiesen, aus der eine Brennkraftmaschine bekannt ist, bei der die Schmiermittelzufuhr zu den Gleitlagern der Kurbelwelle über in den Stirn- bzw. Lagerwänden ausgebildeten Schmiermittelkanälen erfolgt.

Aus der DE-C-904 839 ist eine Zweitakt-Brennkraftmaschine mit Kurbelgehäuseverdichtung bekannt, bei der benachbart von mit Schmiermittel unter Druck versorgten Gleitlagern Abdichtungen zur Kurbelwelle (Kurbelwangen) hin in Form von C-förmigen Fangringen und Labyrinth-Dichtungen ausgebildet sind, die das überschüssige Schmiermittel in einen Sammelraum leiten, wo es abgesaugt wird.

Aus der GB-A-117 614 ist eine Zweitakt-Brennkraftmaschine mit Kurbelgehäuseverdichtung bekannt, bei der das den Gleitlagern unter Druck zugeführte und in die Verdichtungsräume entweichende Schmiermittel am Boden der Verdichtungsräume abgesaugt wird. Dabei gelangt in unerwünschter Weise eine erhebliche Menge Schmiermittel als Ölnebel in die verdichtete Verbrennungsluft.

Die der Erfindung zugrundeliegende Aufgabe besteht darin, eine Lagerung für die Kurbelwelle einer Zweitakt-Brennkraftmaschine mit Kurbelgehäuseverdichtung und Gleitlagern für die Kurbelwelle zu schaffen, die über Schmiermittelkanäle mit Schmiermittel unter Druck versorgt werden kann, die durch Dichtungen zur Kurbelwelle hin und durch separate Abdeckungen zum Kurbeltrieb-Verdichtungsraum hin abgetrennt ist, derart zu verbessern, daß der Wirkungsgrad der Brennkraftmaschine erhöht wird, indem reibende Dichtungen vermieden werden und dennoch ein zuverlässiges Trennen von Schmiermittel- und vorverdichteter Verbrennungsluft erreicht wird.

Gemäß der Erfindung wird diese Aufgabe gelöst, indem eine Lagerung für die Kurbelwelle einer Zweitakt-Brennkraftmaschine mit Kurbelgehäuseverdichtung, der im Oberbegriff des Patentanspruches 1 erläuterten Art, die im Kennzeichen des Patentanspruches 1 aufgezeigten Merkmale aufweist.

Dadurch, daß die Abdeckungen in ihren Wangen die Dichtungen zur Kurbelwelle hin als Labyrinthdichtungen bilden und der vom Kurbeltrieb-Verdichtungsraum abgetrennte Schmiermittelsammelraum der Ölwanne durch Unterdruck beaufschlagt ist, wird die unerwünschte Verlustreibung von herkömmlichen Gewebe- oder Elastomer-Wellendichtungen vermieden und durch den im Schmiermittelsammelraum bereitgestellten Unterdruck wird sichergestellt, daß auch bei den pulsierenden Druckschwankungen innerhalb des Kurbeltrieb-Verdichtungsraumes ein Übertritt von Schmiermittel in die vorverdichtete Verbrennungsluft sicher vermieden wird.

Damit kann während aller Betriebszustände der Zweitakt-Brennkraftmaschine eine einwandfreie Funktion der Labyrinthdichtung in dem Sinne sichergestellt werden, daß keinerlei Schmiermittelaustritt in den oder die Kurbeltrieb-Verdichtungsraum oder -räume erfolgt.

In den Ansprüchen 2 bis 6 sind zweckmäßige Ausführungen der Erfindung näher erläutert.

Es ist auch schon bekannt, bei einer Zweitakt-Brennkraftmaschine eine doppeltwirkende Schmiermittel-Dosierpumpe vorzusehen, die eine bestimmte geringe Menge Schmiermittel der Verbrennungsluft und eine andere bestimmte geringe Menge Schmiermittel unmittelbar den Kurbelwellen-Wälzlagern zuführt.

Die von einer solchen Schmiermittel-Dosierpumpe gelieferte Menge an Schmiermittel liegt hierbei bei ca 0,5 l/Betriebsstunde, wohingegen für die Versorgung von Gleitlagern eine Menge an Schmiermittel erforderlich ist, die in Bereichen von 15 - 30 l/Minute liegt.

Die Erfindung wird anhand zweier in den beiliegenden Zeichnungen gezeigter Ausführungsbeispiele näher erläutert.
- Fig. 1: zeigt einen vertikalen Teilschnitt durch den Kurbelwellenbereich einer Dreizylinder-Zweitakt-Brennkraftmaschine mit einer in der linken Hälfte angedeuteten ersten Ausführungsform der erfindungsgemäßen Gleitlagerung für die Kurbelwelle und einer in der rechten Hälfte angedeuteten zweiten Ausführungsform der Erfindung;
- Fig. 2: zeigt eine vergrößerte Darstellung der Kurbelwelle mit Teilen des Kurbeltriebes und der Lagerung gemäß der ersten Ausführungsform der Erfindung;
- Fig. 3: zeigt einen vertikalen Schnitt entlang der Linie III-III in Fig. 2 bei weggelassenen Pleuelstangen und Kurbelwelle;
- Fig. 4: zeigt eine vergrößerte Darstellung der zweiten Ausführungsforn der Lagerung der Kurbelwelle gemäß der Erfindung;
- Fig. 5: einen vertikalen Schnitt entlang der Linie V-V in Fig. 4, bei weggelassenen Pleuelstangen und Kurbelwelle und
- Fig. 6: einen vertikalen Schnitt ähnlich Fig. 5, aber entsprechend einer weiteren Ausführungsform.

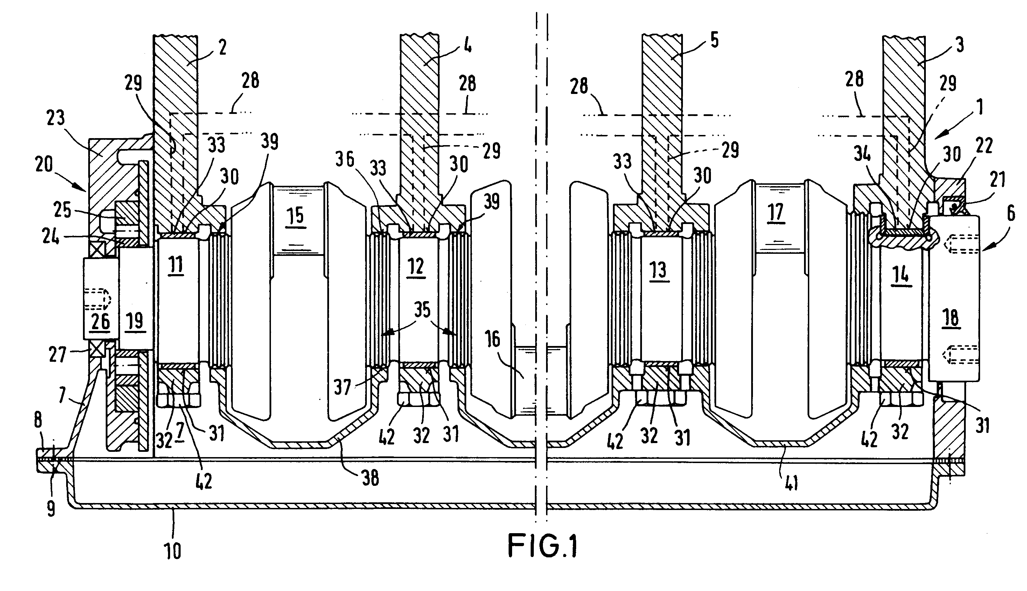

In Fig. 1 ist ein Zylinderblock 1 einer Dreizylinder-Zweitakt-Brennkraftmaschine gezeigt, der Stirnwände 2 und 3 und Lagerwände 4 und 5 aufweist. Der Zylinderblock 1 bildet hierbei mit seinen über die Mittelachse der Kurbelwelle 6 nach unten verlängerten Wandteilen 7 den unteren Bereich des Kurbelgehäuses, an dessen umlaufenden Flansch 8 unter Zwischenlage einer Dichtung 9 eine Ölwanne 10 in bekannter Weise über Schraubenbolzen (nicht gezeigt) befestigt wird.

Die Kurbelwelle 6 weist vier Hauptlagerzapfen 11, 12, 13 und 14 und drei Pleuelzapfen 15, 16 und 17 für die entsprechenden Pleuels und deren Lagerung auf.

Die Kurbelwelle 6 weist an einem Ende einen Anschlußflansch 18 für ein Schwungrad und am anderen Ende einen Anschlußzapfen 19 für eine unmittelbar von der Kurbelwelle 6 getriebene Schmiermittelpumpe 20 auf. Die Kurbelwelle 6 ist an dem Anschlußflansch 18 über einen Wellendichtring 21 und einen Abschlußdeckel 22 gegenüber dem Zylinderblock 1 abgedichtet.

Das andere Ende der Kurbelwelle 6 wird von einem Pumpenflansch 23 umfaßt, in dem der Innenrotor 24 und der Außenrotor 25 einer Trochoiden- oder Rotorpumpe angeordnet sind. Der Innenrotor 24 der Rotorpumpe wird unmittelbar vom Anschlußzapfen 19 der Kurbelwelle 6 angetrieben und steht in Zahneingriff mit einem Außenrotor 25, der mit seinem zylindrischen Außenumfang in einer entsprechenden Ausnehmung im Pumpenflansch 23 läuft. Die Kurbelwelle 6 ist über ihren Endzapfen 26 und einen Wellendichtring 27 nach außen gegenüber dem Pumpenflansch 23 abgedichtet.

Von der Schmiermittelpumpe 20 führen in gestrichelten Linien angedeutete Schmiermittelkanäle 28 im Zylinderblock 1 und Schmiermittelkanäle 29 in den Stirn- und Lagerwänden 2, 3 und 4 und 5 zu den Hauptlager- zapfen 11, 12, 13 und 14.

Im Zylinderblock 1 sind an den Stirnwänden 2 und 3 und den Lagerwänden 4 und 5 entsprechende Teile von Lageraufnahmebohrungen 30 ausgebildet, die in bekannter Weise in einem Arbeitsgang mit entsprechenden Teilen von Lageraufnahmebohrungen 31 an Lagerdeckeln 32 hergestellt werden.

Von den vier Hauptlagern der Kurbelwelle 6 sind drei Gleitlager 33 als einfache Radial-Gleitlager ausgebildet, während das dem Anschlußflansch 18 für das Schwungrad benachbarte Gleitlager als Radial-Axial-Gleitlager 34 ausgebildet ist, das die Kurbelwelle 6 auch in Axialrichtung fixiert.

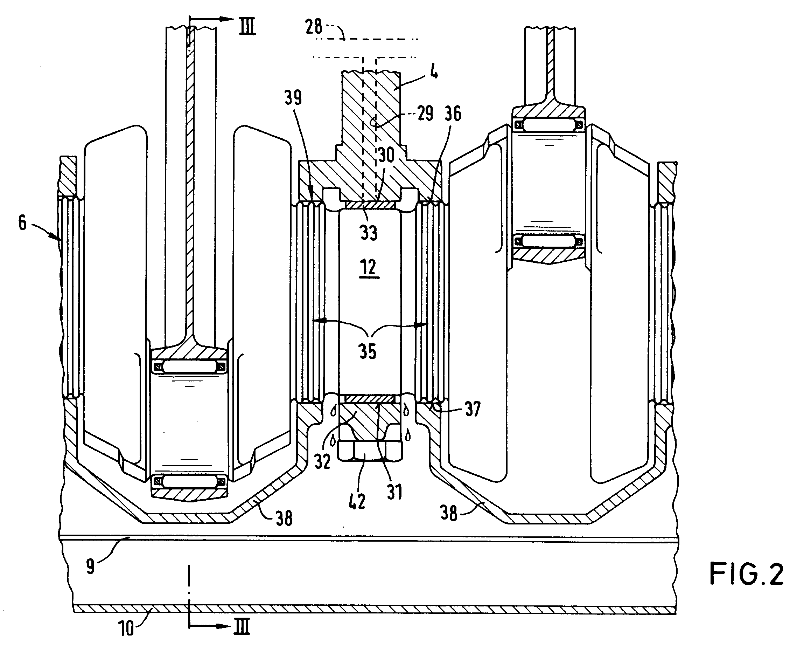

Die gemäß der Erfindung vorgesehene Labyrinthdichtung in Verbindung mit einer zusätzlichen Abdeckung ist in Fig. 1 nur angedeutet und die hierbei möglichen beiden Ausführungsformen werden in Verbindung mit den Fig. 2 und 3 bzw. 4 und 5 im einzelnen erläutert.

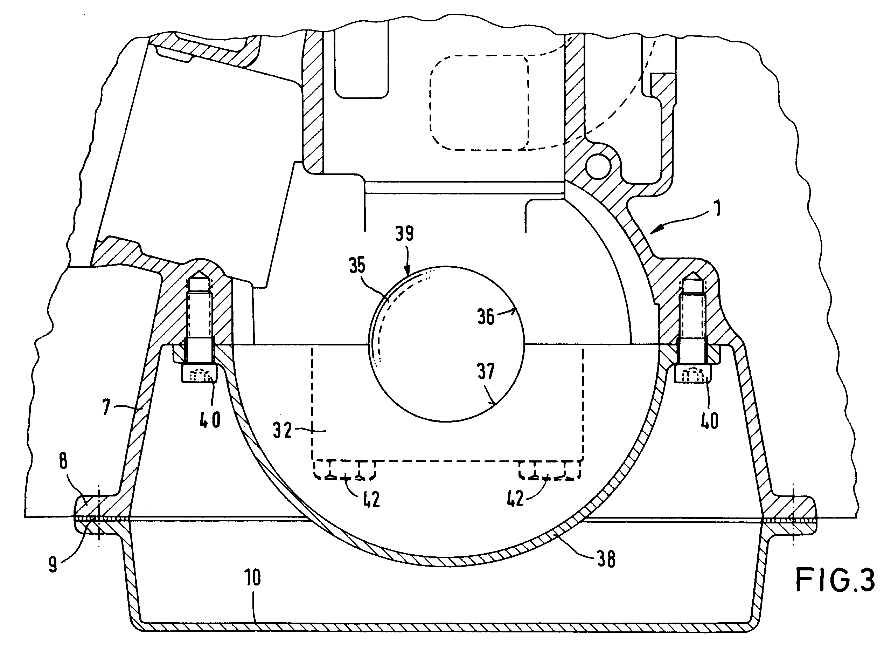

In den Fig. 2 und 3 ist eine erste Ausführungsform der Lageranordnung gemäß der Erfindung in vergrößerter Darstellung gezeigt. Im Bereich des Hauptlagerzapfens 12 der Kurbelwelle 6 wird diese über ein Radial-Gleitlager 33 in den entsprechenden Lageraufnahmebohrungen 30 und 31 der Lagerwand 4 bzw. des Lagerdeckels 32 abgestützt. Die Lagerdeckel 32 sind in bekannter Weise über Befestigungsbolzen 42 am Zylinderblock 1 befestigt.

Zu beiden Seiten des Lagerzapfens 12 sind an der Kurbelwelle 6 eine Mehrzahl von radialen Rillen 35 ausgebildet, die mit entsprechenden Bohrungsabschnitten 36 in der Lagerwand 4 und Bohrungsabschnitten 37 in separaten Abdeckungen 38 zusammenwirken, um die entsprechenden Labyrinthdichtungen 39 zu bilden.

Die separaten Abdeckungen 38 können über entsprechende Befestigungsbolzen 40 an einer entsprechenden Aufnahmefläche des Zylinderblockes 1 befestigt werden.

Es wird noch darauf hingewiesen, daß die axiale Erstreckung der Bohrungsabschnitte 37 an den Abdeckungen 38 so bemessen ist, daß zwischen dem Gleitlager 33 und den benachbarten Labyrinthdichtungen 39 ein Austritt von überschüssigem Schmiermittel in den Schmiermittelsammelraum der Ölwanne 10 ermöglicht wird.

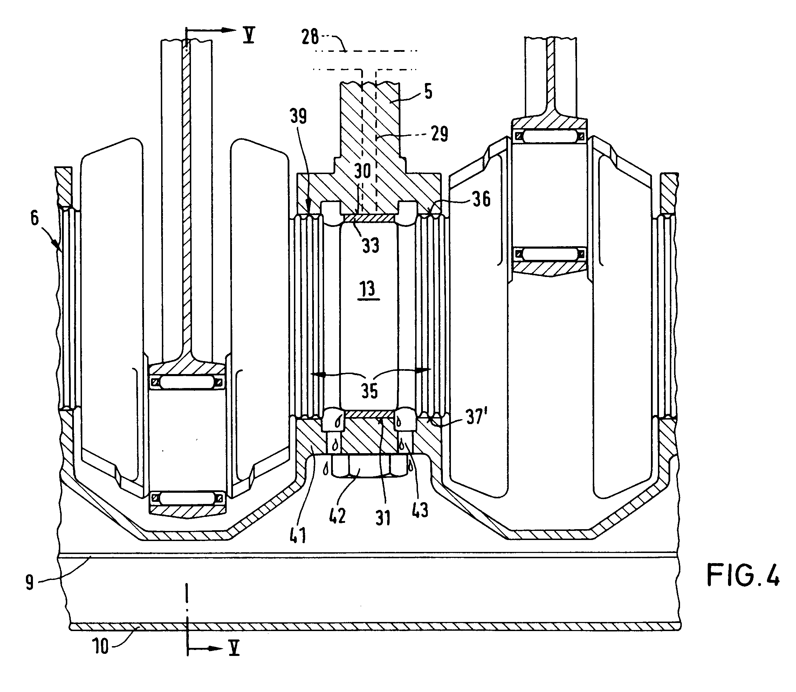

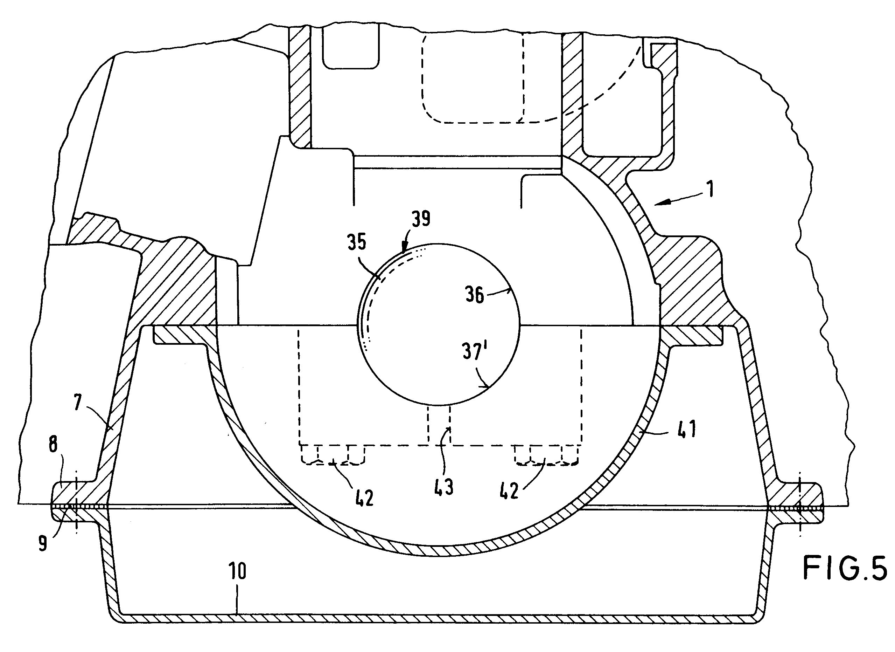

In den Fig. 4 und 5 ist eine zweite Ausführungsform einer erfindungsgemäßen Lagerung in vergrößerte Darstellung gezeigt. Im Bereich des Hauptlagerzapfens 13 ist auch hier wieder die Kurbelwelle 6 benachbart dem Lagerzapfen 13 mit einer Mehrzahl von radialen Nuten 35 versehen, die mit entsprechenden Bohrungsabschnitten 36 im Lagersteg 5 bzw. Bohrungsabschnitten 37' in einer Abdeckung 41 wieder die Labyrinthdichtungen 39 bilden.

In diesem Fall ist jedoch der das Gleitlager 31 abstützende Lagerdeckel integrierter Teil eines Lagerdeckel-Abdeckungs-Bauteiles 41 und dementsprechend sind zum Befestigen des Bauteiles 41 keine separaten Befestigungsbolzen erforderlich, sondern das Bauteil 41 wird mit den entsprechenden Befestigungsbolzen 42 für die Lagerdeckelbefestigung festgehalten.

Im Bereich des Teiles des Bauteiles 41, die den Lagerdeckel für das Gleitlager 33 bildet, sind Ölablaufbohrungen 43 oder Ölablaufschlitze vorgesehen, die überschüssigem Schmiermittel den weg in den Schmiermittelsammelraum der Ölwanne 10 freigeben.

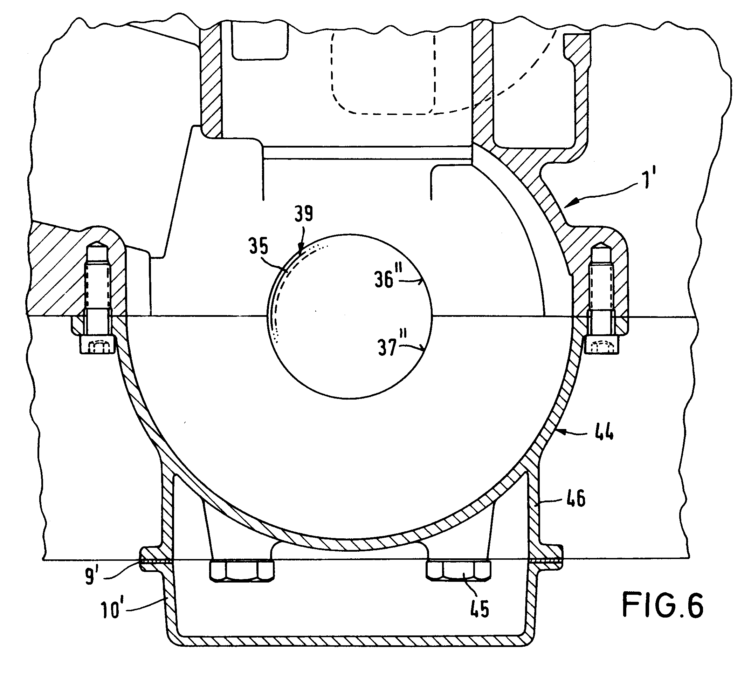

In Fig. 6 ist ein ähnlicher Schnitt wie in Fig. 5 gezeigt, wobei eine Abdeckung nicht nur mit einem Lagerdeckelbauteil zusammengefaßt ist, sondern in einem integralen unteren Kurbelgehäusebauteil 44 ausgebildet ist, das über Befestigungsbolzen 45 im Bereich der Kurbelwellenlagerdeckel am Zylinderblock 1' befestigt ist und der an einer nach unten vorspringenden, umlaufenden Wand 46 über eine Dichtung 91 eine Ölwanne 10' aufnimmt, die einen Schmiermittelsammelraum von kleinerem Volumen bildet.

Durch die erfindungsgemäßen Abdeckungen 38, 41 oder 44 wird sichergestellt, daß das den Gleitlagern 33 und 34 unter Druck zugeführte Schmiermittel in der für die Ausbildung eines hydrodynamischen Schmierfilms erforderlichen Menge zugeführt werden kann, ohne daß überschüssiges Schmiermittel in den Kurbeltrieb-Verdichtungsraum gelangt.

Durch Beaufschlagung des Schmiermittel-Sammelraumes in der Ölwanne 10 mit Unterdruck wird noch eine Unterstützung der Ölrückhaltewirkung der Labyrinthdichtungen 39 bereitgestellt. Der hierfür erforderliche Unterdruck kann hierbei durch eine entsprechend gesteuerte Anzapfung des Ansaugrohrunterdruckes oder aber auch durch eine getrennte Unterdruckpumpe bereitgestellt werden.

## Patentansprüche

1. Lagerung für die Kurbelwelle einer Zweitakt-Brennkraftmaschine mit Kurbelgehäuse-Verdichtung mit zumindest zwei in Stirn- bzw. Lagerwänden angeordneten, die Kurbelwelle (6) abstützenden Kurbelwellenlager (33 und 34), von denen eines als Radial- und eines als Radial-Axial-Gleitlager (33 bzw. 34) ausgebildet ist und wobei im Zylinderblock in den Stirn- und Lagerwänden (2 und 3 bzw. 4 und 5) Schmiermittelkanäle (28 und 29) zur Zufuhr von Schmiermittel unter Druck zu den Gleitlagern (33 und 34) ausgebildet sind, benachbart den Gleitlagern (33 und 34) Dichtungen (39) zur Kurbelwelle (6) hin vorgesehen sind und separate Abdeckungen (38 bzw. 41) den Kurbeltrieb-Verdichtungsraum von einem Schmiermittelsammelraum einer Ölwanne (10) trennen,
**dadurch gekennzeichnet**, daß
- die Abdeckungen (38 bzw. 41) in ihren Wangen die Dichtungen (39) zur Kurbelwelle (6) hin als Labyrinthdichtungen bilden und
- der vom Kurbeltrieb-Verdichtungsraum abgetrennte Schmiermittelsammelraum der Ölwanne (10) durch Unterdruck beaufschlagt ist.

2. Lagerung nach Anspruch 1,
**dadurch gekennzeichnet**, daß
- die Abdeckungen (38) separate, von den Lagerdeckeln (32) der Kurbelwellenlager (33 bzw. 34) getrennte, im Zylinderblock (1) über Befestigungsbolzen (40) festgelegte Bauteile sind.

3. Lagerung nach Anspruch 1,
**dadurch gekennzeichnet**, daß
- die Abdeckungen mit den Lagerdeckeln der Kurbelwellenlager in einem Stück ausgebildet sind und dieses Lagerdeckel-Abdeckungs-Bauteil (41) am Zylinderblock (1) über Befestigungsbolzen (42) befestigt ist.

4. Lagerung nach Anspruch 1,
**dadurch gekennzeichnet**, daß
- die Abdeckungen mit den Lagerdeckeln der Kurbelwellenlager und Teilen des Kurbelgehäuses zu einem unteren Kurbelgehäusebauteil (44) zusammengefaßt sind, das über Befestigungsbolzen (45) am Zylinderblock (1) befestigt ist.

5. Lagerung nach den Ansprüchen 1 bis 4,
**dadurch gekennzeichnet**, daß
- der Unterdruck im Schmiermittelsammelraum der Ölwanne (10) durch eine gesteuerte Abzweigung vom Ansaugrohrunterdruck bereitgestellt wird.

6. Lagerung nach den Ansprüchen 1 bis 4,
**dadurch gekennzeichnet**, daß
- der Unterdruck im Schmiermittelsammelraum der Ölwanne (10) durch eine separate Unterdruckpumpe bereitgestellt wird.

## Claims

1. A mounting for the crankshaft of a two-stroke internal combustion engine with crankcase compression having at least two crankshaft bearings (33 and 34) situated in end or bearing walls and supporting the crankshaft (6), one of them being in the form of a radial and one in the form of a radial-axial plain bearing (33 and 34 respectively), lubricant channels (28 and 29) for the supply of lubricant under pressure to the plain bearings (33 and 34) being formed in the end and bearing walls (2 and 3; 4 and 5 respectively), seals to the crankshaft (6) being provided adjacent the plain bearings (33 and 34) and separate covers (38 and 41 respectively) separating the crankshaft drive-compression chamber from a lubricant collecting chamber of an oil sump (10), characterised in that
- the seals (39) to the crankshaft (6) are formed in the side walls of the covers (38 and 41 respectively) as labyrinth seals, and
- the lubricant collecting chamber of the oil sump (10), separated from the crankshaft drive-compression chamber, is subjected to reduced pressure.

2. A mounting according to claim 1,
characterised in that
- the covers (38) are separate components, separated from the bearing caps (32) of the crankshaft bearings (33 and 34 respectively), and are secured in the cylinder block (1) by means of securing bolts (40).

3. A mounting according to claim 1,
characterised in that
- the covers are formed integrally with the bearing caps of the crankshaft bearings and this bearing cap-cover component (41) is secured to the cylinder block (1) by means of securing bolts (42).

4. A mounting according to claim 1,
characterised in that
- the covers are combined with the bearing caps of the crankshaft bearing and portions of the crankcase to form a lower crankcase component (44) which is secured to the cylinder block (1) by means of securing bolts (45).

5. A mounting according to any of claims 1 to 4,
characterised in that
- the reduced pressure in the lubricant collecting chamber of the oil sump (10) is provided by a controlled branching off of induction pipe reduced pressure.

6. A mounting according to any of claims 1 to 4,
characterised in that
- the reduced pressure in the lubricant collecting chamber of the oil sump (10) is provided through a separate vacuum pump.

## Revendications

1. Disposition de paliers pour le vilebrequin d'un moteur à combustion interne à deux temps avec compression du carter-moteur, comprenant au moins deux paliers de vilebrequin (33 et 34) disposés dans des parois frontales ou d'appui qui supportent le vilebrequin (6), dont l'un est réalisé en tant que palier lisse radial et axial (33 ou 34) et sachant que, dans le bloc-cylindres, dans les parois frontales et d'appui (respectivement 2 et 3 et 4 et 5), sont réalisés des canaux de lubrification (28 et 29) pour amener du lubrifiant sous pression aux paliers lisses (33 et 34), sachant qu'à proximité des paliers lisses (33,34) sont prévus des joints (39) en direction du vilebrequin (6) et que des recouvrements (respectivement 38 et 41) séparés séparent l'espace de compression du mécanisme à bielle et manivelle d'un espace collecteur à lubrifiant d'un carter d'huile (10), caractérisée en ce que les cotés des recouvrements (respectivement 38 et 41) constituent les joints (39) en direction du vilebrequin (6) qui ont la forme de joints à labyrinthe et en ce que l'espace collecteur de lubrifiant du carter d'huile (10) qui est séparé de l'espace de compression du mécanisme à bielle et manivelle est soumis à une dépression.

2. Disposition de paliers selon la revendication 1, caractérisée en ce que les recouvrements (38) sont des pièces distinctes qui sont séparées des chapeaux (32) des paliers (33 ou 34) du vilebrequin et qui sont fixées dans le bloc-cylindres (1) par des boulons de fixation (40).

3. Disposition de paliers selon la revendication 1, caractérisée en ce que les recouvrements sont réalisés d'un seul tenant avec les chapeaux des paliers du vilebrequin, et en ce que cette pièce (41) composée du chapeau de palier et du recouvrement est fixée au bloc-cylindres (1) par des boulons de fixation (42).

4. Disposition de paliers selon la revendication 1, caractérisée en ce que les recouvrements sont assemblés avec les chapeaux-des paliers du vilebrequin et des parties du carter-moteur pour former une pièce de carter-moteur (44) qui est fixée au bloc-cylindres (1) par des boulons de fixation (45).

5. Disposition de paliers selon les revendications 1 à 4, caractérisée en ce que la dépression dans l'espace collecteur de lubrifiant du carter d'huile (10) est créée par une dérivation commandée de la dépression brute d'aspiration.

6. Disposition de paliers selon les revendications 1 à 4, caractérisée en ce que la dépression dans l'espace collecteur de lubrifiant du carter d'huile (10) est créée par une pompe à vide séparée.
